(19) Europäisches Patentamt / European Patent Office / Office européen des brevets

(11) **EP 4 600 309 A1**

(12) **EUROPEAN PATENT APPLICATION**
published in accordance with Art. 153(4) EPC

(43) Date of publication:
**13.08.2025 Bulletin 2025/33**

(21) Application number: **23874456.9**

(22) Date of filing: **07.02.2023**

(51) International Patent Classification (IPC):
***C08L 83/07*** *(2006.01)* ***C08K 3/22*** *(2006.01)*
***C08L 83/05*** *(2006.01)*

(52) Cooperative Patent Classification (CPC):
**C08K 3/22; C08L 83/04**

(86) International application number:
**PCT/JP2023/003987**

(87) International publication number:
**WO 2024/075319 (11.04.2024 Gazette 2024/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.10.2022 PCT/JP2022/037078**

(71) Applicant: **Fukoku Co., Ltd.**
**Ageo-shi, Saitama 362-8561 (JP)**

(72) Inventor: **ASAMI, Takahiro**
**Ageo-shi, Saitama 362-8561 (JP)**

(74) Representative: **Bianchetti & Minoja with Trevisan & Cuonzo IPS SRL**
**Via Plinio, 63**
**20129 Milano (IT)**

# (54) THERMALLY CONDUCTIVE SILICONE COMPOSITION AND CURED PRODUCT THEREOF

(57) A thermally conductive silicone composition, which is a liquid silicone and which is curable, contains:
(A-1) an organopolysiloxane having an alkenyl group at each end of the molecular chain;
(A-2) an organopolysiloxane having an alkenyl group at one end of the molecular chain and no reactive functional group at the other end of the molecular chain;
(A-3) an organopolysiloxane having three or more alkenyl groups in the molecule;
(A-4) an organohydrogenpolysiloxane having a silicon atom-bonded hydrogen atom at one or both ends of the molecular chain and no silicon atom-bonded hydrogen atoms in side chains of the molecular chain;
(B) a hydrosilylation catalyst; and
(C) a thermally conductive filler.

[Fig. 1]

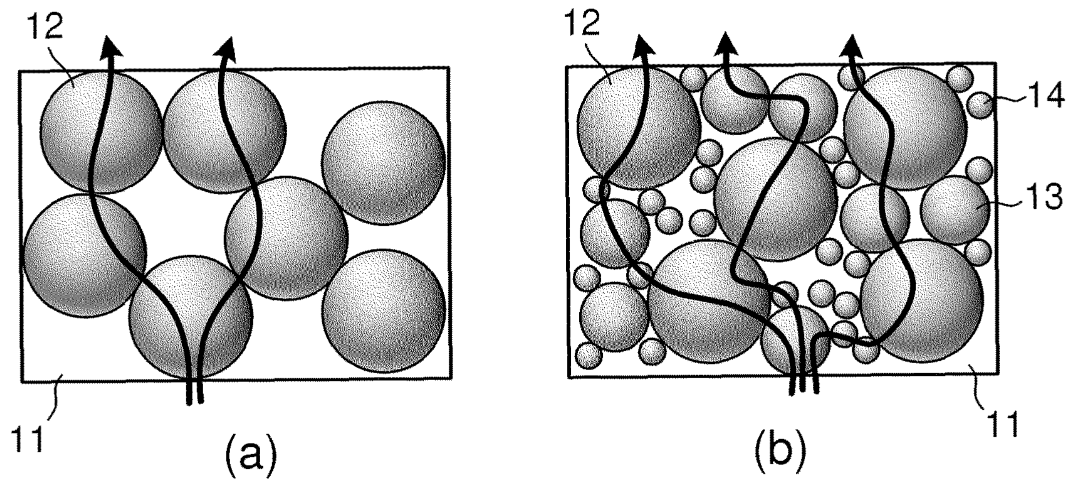


EP 4 600 309 A1

## Description

TECHNICAL FIELD

The present invention relates to thermally conductive silicone compositions and cured products of these thermally conductive compositions.

BACKGROUND ART

In recent years, electric and electronic components have become smaller and more integrated, and the amount of heat generated has increased accordingly. Similarly, the capacity and output of secondary batteries have been increasing, and the amount of heat generated has also been increasing. Since excessive heat rise of heat-generating elements such as electric and electronic components and secondary batteries must be prevented, a structure is adopted in which the heat generated by the heat-generating elements is dissipated to heat-dissipating elements or an exterior case. Thermally conductive compositions or their cured products are interposed between heat-generating elements and heat-dissipating elements to strengthen thermal bonding between the heat-generating elements and the heat-dissipating elements and to efficiently transfer heat from the heat-generating elements to the heat-dissipating elements. Thermally conductive compositions or their cured products are commercially available in various forms, such as heat dissipation grease and heat dissipation sheets. Among these thermally conductive compositions and their cured products, referred to as gap fillers are widely used because they are liquid when applied to heat-generating elements or heat-dissipating elements, have excellent tracking properties for uneven surfaces (i.e., gap-filling properties), enable precision coating, and harden over time to prevent dripping or a pump-out phenomenon.

In order to improve the heat dissipation performance by interposing a thermally conductive composition or its cured product between a heat-generating element and a heat-dissipating element, the thermally conductive composition or its cured product must first have high thermal conductivity. In order to increase thermal conductivity, the thermally conductive composition is mixed with a thermally conductive filler having high thermal conductivity. Reducing the thermal resistance at the interface between the heat-generating element and the thermally conductive composition or its cured product and at the interface between the heat-dissipating element and the thermally conductive composition or its cured product is also of crucial importance for improving the heat dissipation properties. However, increasing the mixing ratio of the thermally conductive filler to obtain high thermal conductivity also increases the compound viscosity of the thermally conductive composition, resulting in a decrease in adhesion when the thermally conductive composition or its cured product comes into contact with a heat-generating element or a heat-dissipating element as well as an increase in thermal resistance at the interface. Increasing the mixing ratio of the thermally conductive filler also increases the hardness of the cured product of the thermally conductive composition. High hardness of a cured product decreases impact absorption ability, decreases the effect of mitigating stress generated by expansion and contraction due to temperature changes, and increases the mechanical impact on the electric and electronic components and secondary batteries that are the heat-generating elements.

When a thermally conductive composition and its cured product contain a volatile component or generate gases due to a chemical reaction that progresses over time, tiny gaps are generated at the interface with the heat-generating element or heat-dissipating element or bubbles are generated inside the thermally conductive composition and its cured product. Gaps and bubbles interfere with heat conduction of the thermally conductive composition or its cured product.

A representative example of a thermally conductive composition called gap filler is a composition in which a liquid (i.e., uncured silicone) matrix is mixed with a thermally conductive filler and other materials. For example, Patent Literature 1 discloses a thermally conductive silicone gel composition containing: (A) an alkenyl group-containing organopolysiloxane; (B) a straight-chain organohydrogenpolysiloxane; (C) a catalyst for a hydrosilylation reaction; and (D) a thermally conductive filler. The thermally conductive filler is surface-treated with an alkoxysilane having an alkyl group with six or more carbon atoms in the molecule. This allows reduction of the viscosity of the thermally conductive silicone gel composition even when a large amount of the thermally conductive filler is added to increase thermal conductivity, improves gap-filling properties, and enables precise coating. If a low molecular weight polydimethylsiloxane is used to reduce viscosity, the cross-link density during curing increases and the cured product becomes hard, but the thermally conductive silicone composition described in Patent Literature 1 uses a straight-chain organohydrogenpolysiloxane containing an average of 2 to 4 silicon atom-bonded hydrogen atoms in the molecule, at least two of the hydrogen atoms being located on a side chain of the molecular chain. By using such a straight-chain organohydrogenpolysiloxane as a cross-link extender, the entire composition is gently cross-linked, resulting in a thermally conductive silicone gel composition that forms a gel-like cured product.

For example, in a thermally conductive composition in which a thermally conductive filler is mixed into a matrix consisting of a polymer compound, the thermal conductivity can be greatly increased by allowing the thermally conductive fillers to contact each other in the matrix to form thermally conductive paths that do not involve the matrix. If a spherical

thermally conductive filler of a single particle size is mixed into the matrix, the number of points at which the thermally conductive fillers come into contact with each other cannot be increased, and improvement in thermal conductivity is therefore limited. Patent Literature 1 discloses the addition of a thermally conductive filler having a large particle size and a thermally conductive filler having a small particle size that are mixed at a ratio according to a theoretical distribution curve of closest packing. Patent Literature 2 discloses a thermally conductive silicone gel composition in which two types of thermally conductive fillers with different median diameters (D50) are mixed at an appropriate ratio and incorporated into the matrix, wherein the particle sizes of the thermally conductive filler are expressed by the median diameters (D50), these being the particle sizes corresponding to 50% in the cumulative particle size distribution based on volume. In a thermally conductive silicone gel composition in which thermally conductive fillers of different particle sizes are mixed and added, the thermally conductive fillers are distributed in the matrix in a near-closest packing state in which small-particle-size thermally conductive fillers exist between large-particle-size thermally conductive fillers, and the number of points at which the thermally conductive fillers come into contact with each other is significantly increased, thus enabling a high thermal conductivity to be obtained while maintaining high flexibility and low dielectric constant.

## CITATION LIST

### PATENT LITERATURE

[PTL 1] WO 2019/021824
[PTL 2] JP 6938808 B

### NON-PATENT LITERATURE

[NPL 1] Jong-Woo, et al, "The properties of ALN-filled epoxy molding compounds by the effects of filler size distribution", J. Mater. Sci., 35, 5907 to 5913 (2000)

## SUMMARY OF INVENTION

### TECHNICAL PROBLEM

According to the techniques described in Patent Literature 1 and Patent Literature 2, a thermally conductive silicone gel composition having excellent flexibility can be obtained. However, in the thermally conductive silicone gel composition described in Patent Literature 1, although the silicon atom-bonded hydrogen atoms in side chains of a straight-chain organohydrogenpolysiloxane molecule are supposed to react by a cross-linking reaction with the alkenyl groups of an organopolysiloxane that contains alkenyl groups, this reaction may proceed only incompletely due to the steric hindrance of the molecule, and silicon atom-bonded hydrogen atoms may remain even after the cross-linking reaction is completed. The remaining silicon atom-bonded hydrogen atoms react with moisture or alcohol over time to be liberated as hydrogen gas, with the result that bubbles form inside the cured product obtained by curing the thermally conductive silicone gel composition, or with the result that gaps form at the interface with the heat-generating element or heat-dissipating element. The resulting increase in thermal resistance interferes with the transfer of heat between the heat-generating element and the heat-dissipating element.

Although Patent Literature 2 shows that two types of thermally conductive fillers that are distinguished by their median diameter (D50) are added to a matrix at a specified ratio, no consideration is given to the widths of the particle size distributions in the thermally conductive fillers. Even assuming identical median diameter (D50), different particle size distributions will result in different particle size distributions after mixing the two types of thermally conductive fillers specified by the median diameter (D50) at the specified ratio, and this difference complicates distribution of the thermally conductive fillers in the matrix in a near-closest packing state. As a result, the viscosity of the thermally conductive silicone gel composition increases, and the hardness of the cured product also increases. Increase in the viscosity degrades the gap-filling properties, worsens the workability, and decreases adhesion with the heat-generating element and heat-dissipating element, resulting in higher thermal resistance. In addition, increase in the hardness of the cured product causes impacts to be transmitted to heat-generating elements, i.e., electronic substrates such as ECUs (electronic control units), electronic components such as CPUs (central processing units), and secondary batteries, thereby causing damage to the heat-generating elements.

The purpose of the present invention is to provide a thermally conductive silicone composition and cured products of the thermally conductive silicone composition that have excellent flexibility and that are subject to little change in thermal resistance over time.

## SOLUTION TO PROBLEM

According to one aspect of the present invention, a thermally conductive silicone composition, which is a liquid and which is curable, the thermally conductive silicone composition containing:

(A-1) an organopolysiloxane having an alkenyl group at each end of the molecular chain;
(A-2) an organopolysiloxane having an alkenyl group at one end of the molecular chain and no reactive functional group at the other end of the molecular chain;
(A-3) an organopolysiloxane having three or more alkenyl groups in the molecule;
(A-4) an organohydrogenpolysiloxane having a silicon atom-bonded hydrogen atom at one or both ends of the molecular chain and no silicon atom-bonded hydrogen atoms in side chains of the molecular chain;
(B) a hydrosilylation catalyst; and
(C) a thermally conductive filler.

According to another aspect of the invention, a cured product is a cured product cured by a hydrosilylation reaction of the above thermally conductive silicone composition.

## ADVANTAGEOUS EFFECTS OF INVENTION

According to the present invention, a thermally conductive silicone composition and a cured product of the thermally conductive silicone composition can be obtained that have excellent flexibility and that exhibit little change in thermal resistance over time.

## BRIEF DESCRIPTION OF DRAWINGS

[Fig. 1] Fig. 1 is a schematic diagram illustrating heat transfer paths in the thermally conductive silicone composition.
[Fig. 2] Fig. 2 is a graph showing the relationship between particle size and cumulative frequency in the thermally conductive filler.
[Fig. 3] Fig. 3 is a graph showing the relationship between particle size and cumulative frequency in the thermally conductive filler.
[Fig. 4] Fig. 4 is a graph showing the relationship between particle size and cumulative frequency in the thermally conductive filler.

## DESCRIPTION OF EMBODIMENTS

Next, an embodiment for carrying out the present invention will be described. The thermally conductive silicone composition based on the present invention is used to enhance thermal bonding between a heat-generating element and a heat-dissipating element by being positioned between the heat-generating element and the heat-dissipating element, either as is (uncured) or in a cured state. Examples of heat-generating elements include electronic substrates such as ECUs, electronic components such as CPUs, and secondary batteries. Examples of heat-dissipating elements include heat sinks and exterior cases. A thermally conductive filler is added to the thermally conductive silicone composition used for these heat-dissipating parts to increase the thermal conductivity, but the thermally conductive silicone composition is preferably highly flexible and exhibits little change in thermal resistance over time, even when the amount of added thermally conductive filler is increased. The present inventor investigated the conditions for obtaining a thermally conductive silicone composition having these characteristics, and as a result, found that both reducing the cross-linking extension in a matrix consisting of silicone and reducing residual reactive functional groups not only improves the flexibility of the thermally conductive silicone composition and its cured product but also reduces change in thermal resistance over time.

Generally, the thermally conductive silicone composition uses a mixture of an organopolysiloxane having an alkenyl group and an organohydrogenpolysiloxane having silicon atom-bonded hydrogen atoms in side chains of the molecular chain as a liquid silicone matrix. The liquid silicone is cross-linked by a hydrosilylation reaction in the presence of a catalyst to form a cured product. To lower the viscosity of the thermally conductive silicone composition, the viscosity of the liquid silicone that serves as a matrix must be lowered, and lowering the viscosity of the liquid silicone necessitates the use of a liquid silicone with a low molecular weight. However, when a liquid silicone with a low molecular weight is cross-linked, the cross-link density increases and the hardness of the cured product also increases. On the other hand, lowering the hardness of the cured product while using a liquid silicone with a low molecular weight necessitates extending the

molecular chain by adding a large amount of an organohydrogenpolysiloxane having silicon atom-bonded hydrogen atoms in the molecule. In this case, however, the amount of the silicon atom-bonded hydrogen atoms relative to the alkenyl groups increases. Furthermore, the silicon atom-bonded hydrogen atoms in the side chains of the molecular chain of organohydrogenpolysiloxane do not react completely due to steric hindrance and tend to remain even after curing. The resulting increase of the percentage of organohydrogenpolysiloxane in the liquid silicone leads to a large amount of silicon atom-bonded hydrogen atoms that remain even after curing by cross-linking.

The silicon atom-bonded hydrogen atoms remaining after curing consequently react with water or alcohol in the presence of a catalyst to generate hydrogen gas, which causes voids in the cured product at the interface with the heat-generating element or heat-dissipating element or causes bubbles inside the cured product. Furthermore, the number of gaps and bubbles caused by the remaining silicon atom-bonded hydrogen atoms increases over time, whereby the thermal resistance of the cured product also increases over time. Therefore, in the thermally conductive silicone composition based on the present invention, the use of an organohydrogenpolysiloxane having a silicon atom-bonded hydrogen atom at one or both ends of the molecular chain and no silicon atom-bonded hydrogen atoms in the side chains of the molecular chain improves the reactivity of the organohydrogenpolysiloxane with an alkenyl group and reduces the number of silicon atom-bonded hydrogen atoms remaining after curing, thereby reducing changes in thermal resistance over time even when the amount of organohydrogenpolysiloxane is increased to improve flexibility.

Thus, the thermally conductive silicone composition based on the present invention contains the following four types of polymers as liquid silicones:

(A-1) an organopolysiloxane having an alkenyl group at each end of the molecular chain;
(A-2) an organopolysiloxane having an alkenyl group at one end of the molecular chain and no reactive functional group at the other end of the molecular chain;
(A-3) an organopolysiloxane having three or more alkenyl groups in the molecule;
(A-4) an organohydrogenpolysiloxane having a silicon atom-bonded hydrogen atom at one or both ends of the molecular chain and no silicon atom-bonded hydrogen atoms in side chains of the molecular chain;

and further contains:

(B) a hydrosilylation catalyst; and
(C) a thermally conductive filler,
and is liquid and curable. The main components that constitute the thermally conductive silicone composition will be described below.

**Liquid Silicone (Silicone Oil)**

The liquid silicone constituting the thermally conductive silicone composition contains four polymer components, (A-1) to (A-4). Of these, component (A-1) is an organopolysiloxane having an alkenyl group at each end (at both ends) of the molecular chain and is the base polymer of the liquid silicone.

Component (A-2) is an organopolysiloxane having an alkenyl group at one end of the molecular chain and no reactive functional group at the other end. This polymer has an alkenyl group that undergoes a hydrosilylation reaction at one end of the molecular chain and no reactive functional group at the other end and therefore cross-links only at one end, allowing the other end to move freely. Thus, allowing component (A-2) to be included in the liquid silicone enables reduction of the degree of cross-linking while inhibiting bleed-out, whereby a flexible thermally conductive silicone composition can be obtained. The amount of component (A-2) added is preferably 10 to 90 parts by mass in 100 parts by mass of the liquid silicone. Adding less than 10 parts by mass results in insufficient effect in lowering the hardness of the cured product, and adding more than 90 parts by mass results in an excessively low degree of cross-linking when the liquid silicone is cured by the hydrosilylation reaction and interferes with curing. Here, examples of the reactive functional group include alkenyl groups, silicon atom-bonded hydrogen atoms, silanol groups, and amino groups.

Component (A-3) is an organopolysiloxane having an average of three or more alkenyl groups in the molecule, and these alkenyl groups react with silicon atom-bonded hydrogen atoms to function as cross-linking points. Components (A-1) and (A-2) are chain polymers, while component (A-3) may be a chain or a cyclic polymer and may have a branched structure. Component (A-3) may be a cyclic polymer such as 2,4,6,8-tetramethyl-2,4,6,8-tetravinylcyclotetrasiloxane or a straight-chain dimethyl silicone oil having four vinyl groups in side chains or at the ends. Component (A-3) may be present in the liquid silicone without forming a complex, or may be present as a platinum complex, for example, a platinum (0)-2,4,6,8-tetramethyl-2,4,6,8-tetravinylcyclotetrasiloxane complex. Furthermore, the non-complex type of component (A-3) and the complex type of component (A-3) may coexist in the liquid silicone. The amount of component (A-3) added is preferably 0.01 to 2 parts by mass in 100 parts by mass of the liquid silicone. If the amount of component (A-3) added is less than 0.01 parts by mass, the number of cross-linking points will be insufficient and curing will not progress. On the other

hand, if the amount added exceeds 2 parts by mass, the number of cross-linking points will be excessive and the hardness of the cured product will be too high.

Component (A-4) is an organohydrogenpolysiloxane having a silicon atom-bonded hydrogen atom at one or both ends of the molecular chain, no silicon atom-bonded hydrogen atoms in the side chains of the molecular chain, and is a polymer component that reacts with each of polymer components (A-1) to (A-3). Component (A-4) is a chain polymer that may or may not have a branched structure. Examples of component (A-4) include straight-chain organohydrogenpolysiloxanes having silicon atom-bonded hydrogen atoms at both ends of the molecular chain and no silicon atom-bonded hydrogen atoms in the side chains and organohydrogenpolysiloxanes having a silicon atom-bonded hydrogen atom at one or both ends of the molecular chain but no silicon atom-bonded hydrogen atoms in the side chains of the molecular chain and having a branched structure. By using component (A-4), the polymer of component (A-1) can be extended by a hydrosilylation reaction, and even when a low-viscosity alkenyl group-containing organopolysiloxane is used, a cured product of the thermally conductive silicone composition having low hardness can be obtained. Furthermore, because component (A-4) has a silicon atom-bonded hydrogen atom at one or both ends of the molecular chain instead of in the side chains of the molecular chain, reactivity is less likely to decrease due to steric hindrance, and unreacted silicon atom-bonded hydrogen atoms are less likely to remain in the cured product. In particular, component (A-4) is preferably added such that the amount of silicon atom-bonded hydrogen atoms contained in this component is 0.6 to 1.6 moles per mole of alkenyl groups in the liquid silicone. If the amount of silicon atom-bonded hydrogen atoms per mole of alkenyl groups is less than 0.6 moles, no curing occurs. On the other hand, if the amount exceeds 1.6 moles, the number of remaining silicon atom-bonded hydrogen atoms increases, and the amount of hydrogen gas generated by reaction with water or alcohol in the presence of a catalyst also increases.

In addition to the polymers of the above components (A-1) to (A-4), the liquid silicone used in the thermally conductive silicone composition based on the present invention may contain, as component (A-5), an organopolysiloxane represented by the following Formula (1). The absence of reactive functional groups such as alkenyl groups and silicon atom-bonded hydrogen atoms in component (A-5) enables a reduction of the cross-link density when curing the liquid silicone and thus can lower the hardness of the cured product. The amount of component (A-5) added is preferably between 0% and 80% by mass of the liquid silicone. If the amount of component (A-5) added exceeds 80% by mass, the cross-link density becomes too low, and the shape cannot be retained.

[Chem. 1]

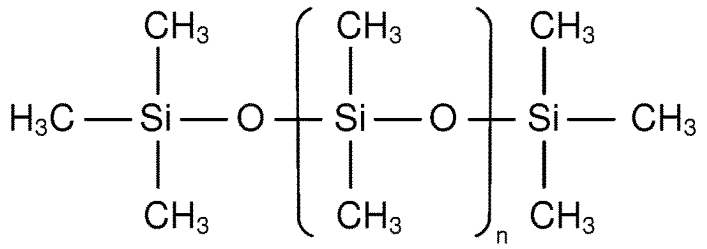

(1)

The viscosity of a liquid silicone containing each of the components (A-1) to (A-4) or a liquid silicone containing each of the components (A-1) to (A-5) is preferably from 10 to 10000 mPa·s. If the viscosity is less than 10 mPa·s, the thermally conductive filler tends to settle during storage of the thermally conductive silicone composition, and if the viscosity exceeds 10000 mPa·s, the viscosity of the thermally conductive silicone composition increases and the adhesion of the thermally conductive silicone composition and its cured product to a heat-generating element or heat-dissipating element is poor.

**Hydrosilylation Catalyst**

The hydrosilylation catalyst, which is component (B), is added to the thermally conductive silicone composition to promote the cross-linking reaction in the liquid silicone described above. Examples of the hydrosilylation catalyst include metal-containing catalysts such as platinum-based catalysts, rhodium-based catalysts, palladium-based catalysts, and more specifically, a platinum (0)-2,4,6,8-tetramethyl-2,4,6,8-tetravinylcyclotetrasiloxane complex and a platinum (0)-1,3-divinyltetramethyldisiloxane complex. One of these catalysts may be used alone, or two or more catalysts may be used in combination. The content of the hydrosilylation catalyst in the thermally conductive silicone composition may be a so-called catalytic amount, a specific example preferably being from 0.1 to 1500 ppm relative to the liquid silicone in terms of the mass of the metal element contained in the catalyst. The amount of hydrosilylation catalyst added is appropriately adjusted so as to obtain a desired curing speed.

**Thermally Conductive Filler**

The thermally conductive filler, which is component (C), is used to impart thermal conductivity to the thermally conductive silicone composition and its cured product. For example, metals, alloys, metal oxides, metal hydroxides, metal nitrides, and metal carbides may be used as the thermally conductive filler, one of these being used alone or two or more being used in combination. From the viewpoint of lowering the viscosity of the thermally conductive silicone composition, the shape of the thermally conductive filler is preferably not plate-like, needle-like, or fibrous, and is preferably spherical or close to spherical. The thermally conductive filler is preferably composed of a soft material and preferably has low Mohs hardness. If the Mohs hardness is high, the thermally conductive filler is likely to wear away the inner surface of the dispenser used to apply the thermally conductive silicone composition or the inner surface of the kneading device used to knead the composition, resulting in problems such as contamination of the thermally conductive silicone composition by foreign matter and increased maintenance frequency of the devices. Examples of materials with low Mohs hardness that are suitable for use as the thermally conductive filler include aluminum hydroxide (Mohs hardness 3) and zinc oxide (Mohs hardness 5). The amount of thermally conductive filler added to the thermally conductive silicone composition is preferably such that the volume fraction of the thermally conductive filler in the thermally conductive silicone composition is in the range of 68.0 vol% to 75.0 vol%. More preferably, the volume fraction of thermally conductive filler is from 69.5 vol% to 75.0 vol%, and even more preferably from 69.5 vol% to 73.0 vol%. A volume fraction of the thermally conductive filler that is less than 68.0 vol% reduces the viscosity of the thermally conductive silicone composition and the hardness of its cured product and excessively limits the thermal conductivity. On the other hand, a volume fraction greater than 75.0 vol% increases the thermal conductivity of the thermally conductive silicone composition and its cured product but also increases the viscosity of the thermally conductive silicone composition and the hardness of its cured product.

In the thermally conductive silicone composition based on the present invention, thermally conductive paths are formed not by way of the matrix but by the mutual contact of the particles of the thermally conductive filler dispersed in the liquid silicone matrix, whereby high thermal conductivity is achieved. As a result, rather than using a thermally conductive filler of a single particle size, thermally conductive fillers having different particle sizes are preferably mixed and added to the liquid silicone to increase the thermal conductivity, as described in Patent Literature 1 and Patent Literature 2. Optimizing the particle size and the addition ratio so that gaps surrounding larger-diameter particles are filled with smaller-diameter particles and gaps surrounding smaller particles are filled with even smaller micro-diameter particles is known to enable lower viscosity and reduced hardness while increasing the filling rate of the thermally conductive filler. Fig. 1 shows an example of heat transfer paths in the thermally conductive silicone composition. Fig. 1(a) shows an example in which thermally conductive filler 12 of a single, relatively large, particle size is blended into matrix 11. Fig. 1(b) shows an example in which three types of thermally conductive fillers 12 to 14 each having a single particle size, namely, thermally conductive filler 12 of a relatively large particle size, thermally conductive filler 13 of a relatively small particle size, and thermally conductive filler 14 of a micro particle size, are blended into matrix 11. In Fig. 1, the heat transfer paths are shown by curved lines with arrows and indicate that mixing and adding thermally conductive fillers 12 to 14 of different particle sizes diversifies the heat transfer paths and reduces the thermal resistance.

Although various studies have been conducted on the preferred mixing ratio of thermally conductive fillers of different particle sizes, these studies all assume either that the particles are of a single particle size or discuss the optimization of particle size and addition ratio using only an average particle size. However, commercially available thermally conductive fillers do not have a single particle size but have a wide range of particle size distribution. Furthermore, depending on the type of particles and the manufacturing method, the particle size distribution differs even for the same average particle size. For this reason, simply considering the addition ratio for each average particle size may not be enough to sufficiently lower the viscosity of the thermally conductive silicone composition and reduce the hardness of the cured product. Achieving low viscosity and low hardness is particularly difficult when the amount of added thermally conductive filler is increased to raise the thermal conductivity. The present inventor therefore investigated the optimal particle size distribution of the thermally conductive filler in a thermally conductive silicone composition by focusing on particle size distribution after mixing multiple types of thermally conductive fillers having different particle sizes. The results of the present inventor's study are described below.

In order to increase the thermal conductivity of a thermally conductive silicone composition as well as to reduce the viscosity and hardness, the particle size distribution of the thermally conductive filler must be appropriately controlled such that the structure approaches the closest packing structure in which small particles fill the gaps between the large-diameter particles. Non-Patent Literature 1 discloses that, in the case of an aluminum nitride (AlN) filler mixed into an epoxy resin, a high filling rate that approaches the closest packing state can be achieved by setting the addition ratio of particles with larger diameter to those with smaller diameter to 0.735:0.265 on a volume basis. Because the factors for achieving a state that approaches the closest packing are the same for aluminum nitride filler mixed into an epoxy resin as for a thermally conductive filler mixed into a liquid silicone, a case is considered in which particles of a large particle size are mixed with particles of a small particle size at a volume ratio of 0.735:0.265.

In Fig. 2, line A shows the cumulative frequency, i.e., the cumulative particle size distribution of the particle size

when particles having a single particle size of 10 μm are mixed with particles having a single particle size of 1 μm at a volume ratio of 0.735:0.265. Line B shows the cumulative particle size distribution when particles having single particle sizes of 50 μm, 5 μm, and 0.5 μm are mixed such that the volume ratio between particles having a particle size of 50 μm and particles having a particle size of 5 μm is 0.735:0.265, and the volume ratio between particles having a particle size of 5 μm and particles having a particle size of 0.5 μm is 0.735:0.265. However, even if the particle type is specified by the average particle size, the actual particle size distribution of the particles will have a certain degree of variation. Even if multiple types of thermally conductive fillers with different average particle sizes are simply mixed at the above ratio, a thermally conductive silicone composition having a cumulative particle size distribution as shown by lines A and B in Fig. 2 is difficult to obtain.

However, the present inventor noted that the cumulative particle size distributions shown by lines A and B in Fig. 2 can be roughly approximated by Formula (2) where a is a positive parameter (coefficient) when the cumulative frequency on a volume basis is y (%) and the particle size is x (μm). Each curve shown by a dashed line in Fig. 2 is an approximation curve indicated by Formula (2) when parameter (coefficient) a is set to various values. Formula (2) is considered to represent the optimal cumulative particle size distribution corresponding to the closest packing.

[Math. 1]

$$y\,[\%] = \begin{cases} ax^{1/2} & \left(ax^{1/2} < 100\right) \\ 100 & \left(ax^{1/2} \geqq 100\right) \end{cases} \qquad (2)$$

In Formula (2), y becomes 100% when $ax^{1/2} \geq 100$ because the maximum value of the cumulative particle size distribution is 100%. As shown in Fig. 2, the approximation curve of Formula (2) shifts to the smaller particle size side as a is increased and shifts to the larger particle size side as a is decreased. A thermally conductive silicone composition with high thermal conductivity and low viscosity can be obtained by mixing thermally conductive fillers with different average particle sizes such that the particle size distribution approaches Formula (2) as closely as possible, and a cured product with high thermal conductivity and low hardness can be obtained by curing this thermally conductive silicone composition. The cumulative particle size distribution on a volume basis after mixing multiple types of thermally conductive fillers can be calculated from the particle size distributions of the thermally conductive fillers for each type of the thermally conductive filler and the blending ratio of those thermally conductive fillers.

When actually mixing multiple types of thermally conductive fillers, an index is preferably introduced that shows how much the actual cumulative particle size distribution of the thermally conductive fillers after mixing deviates from the cumulative particle size distribution shown in Formula (2), and the blending ratio of the thermally conductive fillers is preferably set to minimize the deviation shown by this index. The mean square error E is an effective index showing the degree of deviation in the cumulative particle size distribution. R particle sizes $\{x_n\}$ are considered as a sequence that satisfies the following Formulae (3) and (4) where, when the cumulative particle size distribution is being considered, the particle size that is the starting point (minimum value) of the cumulative frequency calculation is defined as P (μm), the particle size that is the ending point (maximum value) is defined as Q (μm) (where Q > P), k is a constant that satisfies k > 1, and n satisfies 1 ≤ n ≤ R (where n an integer):

$$x_n = k^{n-1}P \qquad (3);$$

and

$$x_R = Q \qquad (4).$$

Clearly, particle size $\{x_n\}$ is the calculation point for the cumulative frequency and is determined such that, between particle size P that is the starting point and particle size Q that is the ending point, R particle sizes that include the starting point and ending point are in a geometric sequence relationship in which the common ratio is k.

The cumulative frequency in the actual thermally conductive filler at particle size $x_n$ is defined as $c_n$ (%), the cumulative frequency obtained by substituting $x_n$ for x in Formula (2) is defined as $y_n$, and the mean square error E is determined as shown in Formula (5) below.

[Math. 2]

$$E = \frac{1}{R}\sum_{n=1}^{R}(c_n - y_n)^2 \qquad (5)$$

wherein,

$$y_n = \begin{cases} a x_n^{1/2} & (a x_n^{1/2} < 100) \\ 100 & (a x_n^{1/2} \geqq 100) \end{cases} \qquad (6)$$

The larger the mean square error E, the greater the deviation between the particle size distribution in the actual thermally conductive filler and the particle size distribution expressed by Formula (2), and the smaller the mean square error E, the smaller the deviation. Since the mean square error E is actually a quadratic function of parameter (coefficient) a, the minimum value of the mean square error E when parameter (coefficient) a is changed can be obtained. This minimum value is defined as $E_{min}$, and the value of parameter (coefficient) a corresponding to the minimum value $E_{min}$ is defined as $a_0$.

According to the present inventor's investigation, when multiple types of thermally conductive fillers were blended so as to satisfy the conditions of $0 \leq E_{min} \leq 45$ and $5.7 \leq a_0 \leq 13.0$, a thermally conductive silicone composition with low viscosity and a cured product with low hardness was obtained. When $E_{min}$ exceeds 45, the deviation from the ideal particle size distribution as shown in Formula (2) increases, with the result that the viscosity of the thermally conductive silicone composition increases and the hardness of the cured product also increases. When $a_0$ is smaller than 5.7, the particle size distribution is excessively biased toward the large particle size side, with the result that, when the thermally conductive silicone composition is interposed between a heat-generating element and a heat-dissipating element, the gaps between the heat-generating element and the heat-dissipating element increases and the heat transfer efficiency deteriorates. On the other hand, when $a_0$ exceeds 13.0, the particle size distribution is excessively biased toward the small particle size side, with the result that the surface area of the thermally conductive filler increases and the viscosity of the thermally conductive silicone composition also increases. Formulae (2) to (5) were derived based only on the particle size distribution of the thermally conductive filler, and the optimal ranges of $E_{min}$ and $a_0$ described here are applicable regardless of the type of thermally conductive filler. Therefore, in the thermally conductive silicone composition based on the present invention, $E_{min}$ and $a_0$ described above preferably satisfy the conditions that $0 \leq E_{min} \leq 45$ and $5.7 \leq a_0 \leq 13.0$ with respect to the particle size distribution of the thermally conductive filler. The type of thermally conductive filler used may be a single type, two or more types that are mixed, or two or more types of thermally conductive filler of different materials that are mixed.

As an example, when the particle size P at the starting point in the particle size distribution of the thermally conductive filler is 0.010 μm, the particle size Q at the ending point is 316 μm, and R is 46, k is nearly equal to 1.259 according to Formulae (3) and (4). The particle size range is set from 0.010 μm to 316 μm because the specific surface area of the thermally conductive filler becomes too large and the viscosity of the thermally conductive silicone composition increases if the particle size is too small, and the thickness of the thermally conductive silicone composition during coating becomes too large and thermal resistance increases if the particle size is too large. R is appropriately determined according to the accuracy required for the difference between the actual cumulative particle size distribution and the cumulative particle size distribution based on Formula (2). Increasing R improves accuracy but increases the amount of calculation, while decreasing R reduces the amount of calculation but slightly worsens accuracy.

Fig. 3 is a diagram for explaining the difference between the actual particle size distribution of the thermally conductive filler and the particle size distribution shown in Formula (2) when the particle size P at the starting point is 0.010 μm, the particle size Q at the ending point is 316 μm, and R is 46 when considering the cumulative particle size distribution. In Fig. 3, the solid-line curve indicates the actual particle size distribution and the dashed-line curve indicates the particle size distribution shown in Formula (2). The lengths of the group of line segments extending vertically between these two curves are each $|y_n-c_n|$. Fig. 4 shows the change in the relationship between the particle size distribution calculated based on Formula (2) and the actual particle size distribution when the value of parameter (coefficient) a is changed. As shown in Fig. 4, when a = 9.6, the actual particle size distribution was in good agreement with the particle size distribution based on Formula (2). Fig. 4 also shows that when a = 5 or a = 15, the deviation between the actual particle size distribution and the particle size distribution based on Formula (2) is large.

### Surface Treatment Agent for Thermally Conductive Filler

The thermally conductive filler component (C) may be subjected to a hydrophobic treatment on its surface by a surface treatment agent to improve wettability to the liquid silicone matrix. By improving wettability to the liquid silicone, the

thermally conductive filler can be dispersed in the liquid silicone with a high degree of dispersion, whereby the viscosity of the resulting thermally conductive silicone composition is reduced and the hardness of the cured product is also reduced. Examples of surface treatment agents used for the thermally conductive filler include alkoxysilanes having an alkyl group with 6 or more carbon atoms in the molecule, such as octyltriethoxysilane and decyltrimethoxysilane, polyorganosiloxanes having a hydroxyl group in the molecule, polyether-modified silicone oils, polyglyceryl-modified silicone oils, glycerin fatty acid esters, sorbitan fatty acid esters, and fatty acids having 6 or more carbon atoms.

**Other Additives**

The liquid silicone constituting the thermally conductive silicone composition may contain, for example, a curing retarder or a pigment as necessary.

**Method for Manufacturing a Thermally Conductive Silicone Composition and its Cured Product**

The thermally conductive silicone composition of the present invention can be manufactured by adding the hydrosilylation catalyst (B) and the thermally conductive filler (component (C)) to a liquid silicone containing components (A-1) to (A-4) or components (A-1) to (A-5) followed by kneading. However, in order to prevent a cross-linking reaction from proceeding before using the thermally conductive silicone composition, for example, the polymer components constituting the liquid silicone except for component (A-4) are preferably first mixed, following which the thermally conductive filler (component (C)) is gradually added followed by kneading. The kneaded mixture is then divided into two portions and the hydrosilylation catalyst (B) then added to one of the portions to produce agent A. Component (A-4) is next added to the other portion to produce agent B, following which agents A and B are mixed at or just before the time of use. The cured product of the thermally conductive silicone composition can be obtained by leaving the thermally conductive silicone composition at room temperature to cure or by heating the composition to cure.

EXAMPLES

The present invention will next be described in detail based on examples and comparative examples in which thermally conductive silicone compositions and their cured products were actually manufactured and evaluated. As evaluation items, plasticity was measured as a property (uncured property) of the thermally conductive silicone compositions, and hardness, thermal resistance change rate, and thermal conductivity were measured as the properties (cured properties) of the cured products.

**Method for Manufacturing Thermally Conductive Silicone Compositions and Cured Products**

In the examples and comparative examples, thermally conductive silicone compositions and their cured products were manufactured as follows: First, the polymer components of liquid silicone other than component (A-4) were mixed, thermally conductive filler, which is component (C), and a surface treatment agent were gradually added, and the mixture was then heated and kneaded at 150°C in a 600-cc Banbury-type mixer. After cooling, the resulting composition was divided into two portions, and component (B) of a hydrosilylation catalyst was added to one portion to produce agent A, and component (A-4) was added to the other portion to produce agent B. Agents A and B were then vacuum deaerated while being mixed with a vacuum stirrer, and the mixture was then poured into a mold and heat-cured at 23°C for 24 hours or at 90°C for 30 minutes to obtain a cured product.

**Methods for Evaluating Thermally Conductive Silicone Compositions and their Cured Products**

(1) Method for measuring plasticity

The plasticity of the thermally conductive silicone composition was measured using a Williams Plastometer (manufactured by Toyo Seiki Seisaku-sho, Ltd.) in accordance with JIS K6249. Samples of 2 $cm^3$ of each of agent A and agent B were collected and the values were measured 5 minutes after load was applied to each of agent A and agent B in an environment of 23 $\pm$ 2°C. The average value of the plasticity of agent A and the plasticity of the agent B was taken as the plasticity of the thermally conductive silicone composition. The smaller the plasticity value, the lower the viscosity of the composition.

(2) Method for measuring hardness

A cured product measuring 100 mm x 100 mm and 10 mm thick was manufactured by the above manufacturing

method and used as a specimen. The specimen was then conditioned in an environment of 23 ± 2°C and measured using an Asker C hardness tester (manufactured by KOBUNSHI KEIKI CO., LTD.) in accordance with JIS K7312. The maximum value after applying pressure by the hardness tester was adopted as the value of hardness.

(3) Method for measuring thermal resistance change rate

A thermally conductive silicone composition was molded to a thickness of 2 mm between two disks having a diameter of 50 mm and a thickness of 0.3 mm and cured to prepare a specimen. The disks used were made of stainless steel (SUS304). The specimen is of a structure in which the cured product is sandwiched between the two disks. The specimen was then left to stand in a constant temperature bath at 150°C for 500 hours. The thermal resistance at 23°C before and after the test was measured using a thermal conductivity measuring device DTC-300 (manufactured by TA Instruments Japan Inc.) in accordance with ASTM E1530. The thermal resistance measured here was the thermal resistance of the entire specimen consisting of two stainless steel plates and the cured product interposed between them. The thermal resistance change rate ΔR is expressed by the following Formula (7):

$$\Delta R = ((R_1 - R_0)/ R_0) \times 100\ (\%) \qquad (7)$$

where $R_0$ is the thermal resistance before leaving the specimen at 150°C for 500 hours and $R_1$ is the thermal resistance after leaving the specimen at 150°C for 500 hours.

(4) Method for measuring thermal conductivity

A cured product measuring 100 mm x 100 mm and 10 mm thick was manufactured by the above manufacturing method and used as a specimen. The surface of the specimen was then covered with poly wrap (manufactured by Ube Film Company Ltd.), taking care not to trap air bubbles, and the specimen was stabilized at 23 ± 2°C. The specimen covered with the wrap was placed on a reference plate (manufactured by KYOTO ELECTRONICS MANUFACTURING CO., LTD.; material: zirconia; thermal conductivity: 3.36 W/m·K) and the thermal conductivity was measured by connecting a probe PD-13 (manufactured by KYOTO ELECTRONICS MANUFACTURING CO., LTD.) to the thermal conductivity measuring device QTM-500 (manufactured by KYOTO ELECTRONICS MANUFACTURING CO., LTD.). The current value was $I^2$ = 9.000 $A^2$, and the measurement time was 60 seconds.

(5) Method for calculating the minimum value $E_{min}$ of the mean square error E and the corresponding value $a_0$ of coefficient a

When considering the cumulative particle size distribution, the particle size P at the starting point is set to 0.010 μm, the particle size Q at the ending point is set to 316 μm, and R is set to 46. In this case, k is nearly equal to 1.259 according to Formulae (3) and (4). The mean square error E was then calculated based on Formula (5), and the minimum value $E_{min}$ of the mean square error E and the value $a_0$ of coefficient a corresponding to this minimum value $E_{min}$ were calculated.

**Example 1**

In the manufacture of a thermally conductive silicone composition, the following components were mixed in the amounts shown in Table 1: dimethylpolysiloxane having a vinyl group at both ends of the molecular chain (DMS-V21, viscosity: 100 cSt, manufactured by Gelest, Inc.) as component (A-1); dimethylpolysiloxane having a vinyl group at only one end of the molecular chain (RH-Vi305B, viscosity: 1000 cSt, manufactured by Zhejiang Runhe Silicone New Material Co. Ltd.) as component (A-2); 2,4,6,8-tetramethyl-2,4,6,8-tetravinylcyclotetrasiloxane (manufactured by Sigma-Aldrich Co., LLC), which is a cyclic siloxane having four vinyl groups in the side chains of the molecular chain, as component (A-3); dimethylpolysiloxane having a silicon atom-bonded hydrogen atom at both ends of the molecular chain (FLD620V20, viscosity: 20 $mm^2/s$, ELKEM JAPAN K.K.) as component (A-4); and a platinum catalyst, platinum (0)-2,4,6,8-tetramethyl-2,4,6,8-tetravinylcyclotetrasiloxane complex (SIP6832.2, manufactured by Gelest, Inc.) as component (B). In addition, three types of aluminum hydroxide having an average particle size of 54 μm (BW53, manufactured by Nippon Light Metal Company, Ltd.), 10 μm (BW103, manufactured by Nippon Light Metal Company, Ltd.), and 1 μm (BF013, manufactured by Nippon Light Metal Company, Ltd.), respectively, were used as the thermally conductive fillers, which is component (C), in the blending ratios shown in Table 1. Octyltriethoxysilane (Silquest A-137, manufactured by Momentive Performance Materials Japan LLC) was used as a surface treatment agent for the thermally conductive fillers in the amount shown in Table 1. In this example, dimethylpolysiloxane having a silicon atom-bonded hydrogen atom at both ends

of the molecular chain was used as component (A-4). Since this is a dimethylpolysiloxane having a silicon atom-bonded hydrogen atom at both ends of the molecular chain, this component can be said to be an organohydrogenpolysiloxane having a silicon atom-bonded hydrogen atom at one or both ends of the molecular chain and no silicon atom-bonded hydrogen atoms in the side chains of the molecular chain.

As shown in Table 1, in the thermally conductive silicone composition of Example 1, the ratio of the number of moles of silicon atom-bonded hydrogen atoms to the number of moles of alkenyl groups in the blended liquid silicone was 1.0, and the volume fraction of the thermally conductive filler was 69.5 % by volume. The cumulative 25% particle size (D25) was 8 μm, the cumulative 50% particle size (D50) was 27 μm, and the cumulative 75% particle size (D75) was 59 μm on a volume basis calculated from the particle size distribution and the blending ratio of each thermally conductive filler blended. The mean square error E calculated by Formula (5) was at a minimum when parameter (coefficient) a was 9.6 (i.e., $a_0 = 9.6$), and the minimum value $E_m$ of the mean square error E at that time was 7.9. As shown in Table 1, the plasticity of the obtained thermally conductive silicone composition was low at 28, the hardness and thermal resistance change rate of the cured product were both low at 20 and +2%, respectively, and the thermal conductivity of the cured product was 2.8 W/m K. These values are satisfactory for a thermally conductive silicone composition.

**Examples 2 to 6**

Thermally conductive silicone compositions were manufactured and evaluated in the same manner as in Example 1, except that the ratio of the added thermally conductive fillers was changed. The results are shown in Table 1.

**Example 7**

In the manufacture of a thermally conductive silicone composition, the following components were used and blended in the amounts shown in Table 1: dimethylpolysiloxane having a vinyl group at both ends of the molecular chain (DMS-V31, viscosity: 1000 cSt, manufactured by Gelest, Inc.) as component (A-1); dimethylpolysiloxane having a vinyl group at one end of the molecular chain (MCR-V25, viscosity: 500 cSt, manufactured by Gelest, Inc.) as component (A-2); a cyclic siloxane having four vinyl groups in the side chains of the molecular chain, 2,4,6,8-tetramethyl-2,4,6,8-tetravinylcyclotetrasiloxane (manufactured by Sigma-Aldrich Co., LLC) as component (A-3); dimethylpolysiloxane having a silicon atom-bonded hydrogen atom at both ends of the molecular chain (FLD620V20, viscosity: 20 $mm^2/s$, manufactured by ELKEM JAPAN K.K) as component (A-4); dimethylpolysiloxane having no reactive functional groups (KF-96-100CS, viscosity: 100 cSt, manufactured by Shin-Etsu Chemical Co., Ltd.) as component (A-5); and a platinum catalyst, platinum (0)-1,3-divinyltetramethyldisiloxane complex (P2075, manufactured by Tokyo Chemical Industry Co., Ltd.) as component (B). The same materials as in Example 1 were used as the thermally conductive fillers and surface treatment agent in the amounts shown in Table 1. Evaluation was performed in the same manner as in Example 1. The results are shown in Table 1.

**Examples 8 and 9**

As shown in Table 1, thermally conductive silicone compositions were manufactured and evaluated in the same manner as in Example 7, except that the blending amounts of thermally conductive fillers, which are component (C), and the surface treatment agent were increased compared to Example 7. The results are shown in Table 1.

**Example 10**

As shown in Table 1, a thermally conductive silicone composition was manufactured and evaluated in the same manner as in Example 9, except that the blending amount of a cyclic siloxane having four vinyl groups in the side chains of the molecular chain, which is component (A-3), and the added amounts of thermally conductive fillers, which are component (C), were reduced compared to Example 9. The results are shown in Table 1.

**Example 11**

As shown in Table 1, a thermally conductive silicone composition was manufactured and evaluated in the same manner as in Example 10, except that the blending amount of a cyclic siloxane having four vinyl groups in the side chains of the molecular chain, which is component (A-3), was increased compared to Example 10. The results are shown in Table 1.

**Example 12**

In Example 1, a thermally conductive silicone composition was manufactured and evaluated by changing the blending amounts of each component such that 1.6 moles of silicon atom-bonded hydrogen atoms were added per mole of vinyl groups, which are alkenyl groups in the liquid silicone. The blending amounts and evaluation results are shown in Table 1.

**Example 13**

In Example 1, a thermally conductive silicone composition was manufactured and evaluated by changing the blending amounts of each component such that 0.6 moles of silicon atom-bonded hydrogen atoms were added per mole of vinyl groups, which are alkenyl groups in the liquid silicone. The blending amounts and evaluation results are shown in Table 1.

**Examples 14 and 15**

Thermally conductive silicone compositions were manufactured and evaluated in the same manner as in Example 7 using zinc oxide as the thermally conductive fillers, which are component (C). The thermally conductive fillers used were zinc oxide with an average particle size of 80 μm (large particle size zinc oxide (1), manufactured by HAKUSUI TECH CO., LTD.), zinc oxide with an average particle size of 10 μm (calcined zinc oxide, manufactured by HAKUSUI TECH CO., LTD.), and zinc oxide with an average particle size of 1 μm (zinc oxide type 1, manufactured by MITSUI MINING & SMELTING CO.,LTD.), and the blending amounts of each component were as shown in Table 1. The evaluation results are shown in Table 1.

**Example 16**

The same liquid silicone and the same hydrosilylation catalyst, which is component (B), as those used in Example 1 were used in the blending amounts shown in Table 1, and a thermally conductive silicone composition was manufactured in the same manner as in Example 1. However, three types of aluminum hydroxide were used as the thermally conductive fillers, which are component (C): aluminum hydroxide with an average particle size of 105 μm (SB93, manufactured by Nippon Light Metal Company, Ltd.), aluminum hydroxide with an average particle size of 10 μm (BW103, manufactured by Nippon Light Metal Company, Ltd.), and aluminum hydroxide with an average particle size of 1 μm (BF013, manufactured by Nippon Light Metal Company, Ltd.), and these fillers were added in the blending ratios shown in Table 1. The same material as in Example 1 was also used for the surface treatment agent of the thermally conductive fillers in the blending amount shown in Table 1. The obtained thermally conductive silicone composition was evaluated in the same manner as in Example 1. The results are shown in Table 1.

**Example 17**

A thermally conductive silicone composition was manufactured and evaluated in the same manner as in Example 16, except that the blending amounts of the thermally conductive fillers and the surface treatment agent of the thermally conductive fillers were changed. The results are shown in Table 1.

**Comparative Examples 1 to 3**

Thermally conductive silicone compositions equivalent to the thermally conductive silicone gel composition disclosed in Patent Literature 1 were manufactured. For the liquid silicone, dimethylpolysiloxane having a vinyl group at both ends of the molecular chain (SF3000EDK001, viscosity: 1000 cSt, manufactured by KCC Corporation) and methylhydrogenpolysiloxane having four silicon atom-bonded hydrogen atoms in the side chains of the molecular chain (HMS -151, manufactured by Gelest, Inc.) were used. As the hydrosilylation catalyst, a platinum catalyst, Pt (0)-1,3-divinyltetramethyldisiloxane complex (P2075, manufactured by Tokyo Kasei Kogyo Co., Ltd.), was used, and the same materials as those used in Example 1 were used for the thermally conductive fillers and surface treatment agent. The blending amounts are shown in Table 1. The obtained thermally conductive silicone compositions were evaluated in the same manner as in Example 1. The evaluation results are shown in Table 1.

The thermally conductive silicone compositions of the comparative examples have the same or slightly lower thermal conductivity, a large minimum value $E_{min}$ of the mean square error E, high plasticity (i.e., high viscosity), and high hardness of the cured product compared to the thermally conductive silicone composition of the examples. When methylhydrogenpolysiloxane having four silicon atom-bonded hydrogen atoms in the side chains of the molecular chain is

used to achieve low viscosity and low hardness, the amount of silicon atom-bonded hydrogen atoms remaining in the cured product increases, and the thermal resistance change rate of the cured product also increases. In Comparative Example 3, the amount of methylhydrogenpolysiloxane having four silicon atom-bonded hydrogen atoms in the side chains of the molecular chain was reduced compared to Comparative Examples 1 and 2. The thermal resistance change rate of the cured product was also lower than in Comparative Examples 1 and 2, but the hardness of the cured product was higher.

By comparing the examples with the comparative examples, it was found that the thermally conductive silicone composition based on the present invention exhibited good thermal conductivity, low plasticity and viscosity, and low hardness and thermal resistance change rate of the cured product. In other words, according to the present invention, a thermally conductive silicone composition that has thermal conductivity equal to or better than that of conventional compositions and low viscosity and a cured product that has low hardness and low thermal resistance change rate can be obtained.

**Table 1A**

| (Table 1) | | | | | | | |
|---|---|---|---|---|---|---|---|
| | | unit | Examples | | | | |
| | | | 1 | 2 | 3 | 4 | 5 |
| Liquid silicone | (A-1) Dimethylpolysiloxane having a vinyl group at both ends of the molecular chain | mass part | 17.95 | 17.95 | 17.95 | 17.95 | 17.95 |
| | (A-2) Dimethylpolysiloxane having a vinyl group at one end of the molecular chain | mass part | 70.00 | 70.00 | 70.00 | 70.00 | 70.00 |
| | (A-3) Dimethylpolysiloxane having four vinyl groups in the side chains of the molecular chain | mass part | 0.05 | 0.05 | 0.05 | 0.05 | 0.05 |
| | (A-4) Dimethylpolysiloxane having a silicon atom-bonded hydrogen atom at both ends of the molecular chain | mass part | 12.00 | 12.00 | 12.00 | 12.00 | 12.00 |
| | (A-5) Dimethylpolysiloxane having no reactive functional groups | mass part | - | - | - | - | - |
| | Methylhydrogenpolysiloxane having four silicon atom-bonded hydrogen atoms in the side chains of the molecular chain | mass part | - | - | - | - | - |
| (B) Hydrosilylation catalyst: Platinum catalyst | | mass part | 0.10 | 0.10 | 0.10 | 0.10 | 0.10 |
| (C) Thermally conductive filler | Aluminum hydroxide: average particle size 105 μm | mass part | - | - | - | - | - |
| | Aluminum hydroxide: average particle size 54 μm | mass part | 374.00 | 421.00 | 241.00 | 481.00 | 391.00 |
| | Aluminum hydroxide: average particle size 10 μm | mass part | 120.00 | 60.00 | 240.00 | - | - |
| | Aluminum hydroxide: average particle size 1 μm | mass part | 107.00 | 120.00 | 120.00 | 120.00 | 210.00 |
| | Zinc oxide: average particle size 80 μm | mass part | - | - | - | - | - |
| | Zinc oxide: average particle size 10 μm | mass part | - | - | - | - | - |
| | Zinc oxide: average particle size 1 μm | mass part | - | - | - | - | - |

(continued)

| (Table 1) | | | | | | | |
|---|---|---|---|---|---|---|---|
| | | unit | Examples | | | | |
| | | | 1 | 2 | 3 | 4 | 5 |
| Surface treatment agent: Octyltriethoxysilane | | mass part | 6.01 | 6.01 | 6.01 | 6.01 | 6.01 |
| Total | | mass part | 707.11 | 707.11 | 707.11 | 707.11 | 707.11 |
| Number of moles of silicon atom-bonded hydrogen atoms/number of moles of alkenyl groups | | - | 1.0 | 1.0 | 1.0 | 1.0 | 1.0 |
| Volume fraction of thermally conductive filler | | Vol % | 69.5 | 69.5 | 69.5 | 69.5 | 69.5 |
| Thermally conductive filler | Cumulative 25% particle size | μm | 8 | 10 | 4 | 14 | 1.4 |
| | Cumulative 50% particle size | μm | 27 | 32 | 16 | 39 | 28 |
| | Cumulative 75% particle size | μm | 59 | 62 | 39 | 68 | 60 |
| particle size distribution | Parameter $a_0$ that minimizes mean squared error E according to Formula (5) | - | 9.6 | 9.1 | 11.7 | 8.5 | 9.6 |
| | Minimum value $E_{min}$ of mean square error E | - | 7.9 | 9.8 | 15.1 | 16.2 | 23.1 |
| Uncured properties | Plasticity | - | 28 | 30 | 34 | 36 | 32 |
| Cured properties | Hardness (Asker C) | - | 20 | 28 | 23 | 32 | 30 |
| | Thermal resistance change rate ΔR | % | +2 | +5 | +4 | +2 | +5 |
| | Thermal conductivity | W/m·K | 2.8 | 2.8 | 2.7 | 2.8 | 2.9 |

**Table 1B**

| (Continued from Table 1) | | | | | | | |
|---|---|---|---|---|---|---|---|
| | | unit | Examples | | | | |
| | | | 6 | 7 | 8 | 9 | 10 |
| Liquid silicone | (A-1) Dimethylpolysiloxane having a vinyl group at both ends of the molecular chain | mass part | 17.95 | 20.45 | 20.45 | 20.45 | 20.49 |
| | (A-2) Dimethylpolysiloxane having a vinyl group at one end of the molecular chain | mass part | 70.00 | 42.00 | 42.00 | 42.00 | 42.00 |
| | (A-3) Dimethylpolysiloxane having four vinyl groups in the side chains of the molecular chain | mass part | 0.05 | 0.05 | 0.05 | 0.05 | 0.01 |
| | (A-4) Dimethylpolysiloxane having a silicon atom-bonded hydrogen atom at both ends of the molecular chain | mass part | 12.00 | 6.50 | 6.50 | 6.50 | 6.50 |
| | (A-5) Dimethylpolysiloxane having no reactive functional groups | mass part | - | 31.00 | 31.00 | 31.00 | 31.00 |
| | Methylhydrogenpolysiloxane having four silicon atom-bonded hydrogen atoms in the side chains of the molecular chain | mass part | - | - | - | - | - |
| (B) Hydrosilylation catalyst: Platinum catalyst | | mass part | 0.10 | 0.10 | 0.10 | 0.10 | 0.10 |
| (C) Thermally conductive filler | Aluminum hydroxide: average particle size 105 μm | mass part | - | - | - | - | - |
| | Aluminum hydroxide: average particle size 54 μm | mass part | 241.00 | 345.00 | 447.00 | 502.00 | 425.00 |
| | Aluminum hydroxide: average particle size 10 μm | mass part | 180.00 | 112.00 | 144.00 | 162.00 | 137.00 |
| | Aluminum hydroxide: average particle size 1 μm | mass part | 180.00 | 100.00 | 129.00 | 146.00 | 123.00 |
| | Zinc oxide: average particle size 80 μm | mass part | - | - | - | - | - |
| | Zinc oxide: average particle size 10 μm | mass part | - | - | - | - | - |
| | Zinc oxide: average particle | mass | - | - | - | - | - |
| | size 1 μm | part | | | | | |
| Surface treatment agent: Octyltriethoxysilane | | mass part | 6.01 | 5.57 | 7.20 | 8.10 | 6.85 |
| Total | | mass part | 707.11 | 662.67 | 827.30 | 918.20 | 791.95 |
| Number of moles of silicon atom-bonded hydrogen atoms/number of moles of alkenyl groups | | - | 1.0 | 1.3 | 1.3 | 1.3 | 1.3 |
| Volume fraction of thermally conductive filler | | Vol % | 69.5 | 68.0 | 72.9 | 75.0 | 72.0 |

(continued)

| (Continued from Table 1) | | | | | | | |
|---|---|---|---|---|---|---|---|
| | | unit | Examples | | | | |
| | | | 6 | 7 | 8 | 9 | 10 |
| Thermally conductive filler particle size distribution | Cumulative 25% particle size | μm | 1.5 | 8 | 8 | 8 | 8 |
| | Cumulative 50% particle size | μm | 14 | 27 | 27 | 27 | 27 |
| | Cumulative 75% particle size | μm | 39 | 59 | 59 | 59 | 59 |
| | Parameter $a_0$ that minimizes mean squared error E according to Formula (5) | - | 13.0 | 9.6 | 9.6 | 9.6 | 9.6 |
| | Minimum value $E_{min}$ of mean square error E | - | 35.0 | 7.9 | 7.9 | 7.9 | 7.9 |
| Uncured properties | Plasticity | - | 36 | 26 | 40 | 50 | 40 |
| Cured properties | Hardness (Asker C) | - | 27 | 20 | 28 | 40 | 10 |
| | Thermal resistance change rate ΔR | % | +3 | +6 | +2 | +8 | +5 |
| | Thermal conductivity | W/m·K | 2.7 | 2.5 | 3.3 | 3.6 | 3.1 |

**Table 1C**

| (Continued from Table 1) | | | | | | | |
|---|---|---|---|---|---|---|---|
| | | unit | Examples | | | | |
| | | | 11 | 12 | 13 | 14 | 15 |
| Liquid silicone | (A-1) Dimethylpolysiloxane having a vinyl group at both ends of the molecular chain | mass part | 20.20 | 16.75 | 19.00 | 20.45 | 20.45 |
| | (A-2) Dimethylpolysiloxane having a vinyl group at one end of the molecular chain | mass part | 42.00 | 65.40 | 74.05 | 42.00 | 42.00 |
| | (A-3) Dimethylpolysiloxane having four vinyl groups in the side chains of the molecular chain | mass part | 0.30 | 0.05 | 0.05 | 0.05 | 0.05 |
| | (A-4) Dimethylpolysiloxane having a silicon atom-bonded hydrogen atom at both ends of the molecular chain | mass part | 6.50 | 17.80 | 6.90 | 6.50 | 6.50 |
| | (A-5) Dimethylpolysiloxane having no reactive functional groups | mass part | 31.00 | - | - | 31.00 | 31.00 |
| | Methylhydrogenpolysiloxane having four silicon atom-bonded hydrogen atoms in the side chains of the molecular chain | mass part | - | - | - | - | - |
| (B) Hydrosilylation catalyst: Platinum catalyst | | mass part | 0.10 | 0.10 | 0.10 | 0.10 | 0.10 |

(continued)

| (Continued from Table 1) | | | | | | | |
|---|---|---|---|---|---|---|---|
| | | unit | Examples | | | | |
| | | | 11 | 12 | 13 | 14 | 15 |
| (C) Thermally conductive filler | Aluminum hydroxide: average particle size 105 μm | mass part | - | - | - | - | - |
| | Aluminum hydroxide: average particle size 54 μm | mass part | 425.00 | 425.00 | 425.00 | - | - |
| | Aluminum hydroxide: average particle size 10 μm | mass part | 137.00 | 137.00 | 137.00 | - | - |
| | Aluminum hydroxide: average particle size 1 μm | mass part | 123.00 | 123.00 | 123.00 | - | - |
| | Zinc oxide: average particle size 80 μm | mass part | - | - | - | 752.00 | 918.00 |
| | Zinc oxide: average particle size 10 μm | mass part | - | - | - | 396.00 | 484.00 |
| | Zinc oxide: average particle size 1 μm | mass part | - | - | - | 147.00 | 179.00 |
| Surface treatment agent: Octyltriethoxysilane | | mass part | 6.85 | 6.85 | 6.85 | 5.89 | 7.19 |
| Total | | mass part | 791.95 | 791.95 | 791.95 | 1400.99 | 1688.2 9 |
| Number of moles of silicon atom-bonded hydrogen atoms/number of moles of alkenyl groups | | - | 1.3 | 1.6 | 0.6 | 1.3 | 1.3 |
| Volume fraction of thermally conductive filler | | Vol % | 72.0 | 72.0 | 72.0 | 68.0 | 71.9 |
| Thermally conductive filler particle size distribution | Cumulative 25% particle size | μm | 8 | 8 | 8 | 10 | 10 |
| | Cumulative 50% particle size | μm | 27 | 27 | 27 | 37 | 37 |
| | Cumulative 75% particle size | μm | 59 | 59 | 59 | 90 | 90 |
| | Parameter $a_0$ that minimizes mean squared error E according to Formula (5) | - | 9.6 | 9.6 | 9.6 | 8.0 | 8.0 |
| | Minimum value $E_{min}$ of mean square error E | - | 7.9 | 7.9 | 7.9 | 7.2 | 7.2 |
| Uncured properties | Plasticity | - | 40 | 41 | 41 | 36 | 41 |
| Cured properties | Hardness (Asker C) | - | 35 | 25 | 27 | 32 | 40 |
| | Thermal resistance change rate ΔR | % | +6 | +8 | +3 | +2 | +6 |
| | Thermal conductivity | W/m·K | 3.2 | 3.1 | 3.1 | 3.6 | 5.8 |

**Table 1D**

| (Continued from Table 1) | | | | | | | |
|---|---|---|---|---|---|---|---|
| | | unit | Examples | | Comparative Examples | | |
| | | | 16 | 17 | 1 | 2 | 3 |
| Liquid silicone | (A-1) Dimethylpolysiloxane having a vinyl group at both ends of the molecular chain | mass part | 37.40 | 37.40 | 85.00 | 85.00 | 91.50 |
| | (A-2) Dimethylpolysiloxane having a vinyl group at one end of the molecular chain | mass part | 47.00 | 47.00 | - | - | - |
| | (A-3) Dimethylpolysiloxane having four vinyl groups in the side chains of the molecular chain | mass part | 0.10 | 0.10 | - | - | - |
| | (A-4) Dimethylpolysiloxane having a silicon atom-bonded hydrogen atom at both ends of the molecular chain | mass part | 15.50 | 15.50 | - | - | - |
| | (A-5) Dimethylpolysiloxane having no reactive functional groups | mass part | - | - | - | - | - |
| | Methylhydrogenpolysiloxane having four silicon atom-bonded hydrogen atoms in the side chains of the molecular chain | mass part | - | - | 15.00 | 15.00 | 8.50 |
| (B) Hydrosilylation catalyst: Platinum catalyst | | mass part | 0.10 | 0.10 | 0.10 | 0.10 | 0.10 |
| (C) Thermally conductive filler | Aluminum hydroxide: average particle size 105 µm | mass part | 468.00 | 420.00 | - | - | - |
| | Aluminum hydroxide: average particle size 54 µm | mass part | - | - | 413.00 | 222.00 | 222.00 |
| | Aluminum hydroxide: average particle size 10 µm | mass part | 184.00 | 151.00 | 139.00 | - | - |
| | Aluminum hydroxide: average particle size 1 µm | mass part | 68.00 | 30.00 | - | 330.00 | 330.00 |
| | Zinc oxide: average particle size 80 µm | mass part | | | | | |
| | Zinc oxide: average particle size 10 µm | mass part | | | | | |
| | Zinc oxide: average particle size 1 µm | mass part | | | | | |
| Surface treatment agent: Octyltriethoxysilane | | mass part | 7.20 | 6.01 | 5.50 | 5.50 | 5.50 |
| Total | | mass part | 827.30 | 707.11 | 657.60 | 657.60 | 657.60 |
| Number of moles of silicon atom-bonded hydrogen atoms/number of moles of alkenyl groups | | - | 1.0 | 1.0 | 3.2 | 3.2 | 1.6 |
| Volume fraction of thermally conductive filler | | Vol % | 72.9 | 69.5 | 67.8 | 67.8 | 67.8 |

(continued)

| (Continued from Table 1) | | | | | | | |
|---|---|---|---|---|---|---|---|
| | | unit | Examples | | Comparative Examples | | |
| | | | 16 | 17 | 1 | 2 | 3 |
| Thermally conductive filler particle size distribution | Cumulative 25% particle size | μm | 14 | 19 | 17 | 1.1 | 1.1 |
| | Cumulative 50% particle size | μm | 85 | 93 | 36 | 2 | 2 |
| | Cumulative 75% particle size | μm | 118 | 120 | 64 | 39 | 39 |
| | Parameter $a_0$ that minimizes mean squared error E according to Formula (5) | - | 6.1 | 5.7 | 8.1 | 10.4 | 10.4 |
| | Minimum value $E_{min}$ of mean square error E | - | 26.0 | 45.0 | 55.6 | 48.6 | 48.6 |
| Uncured properties | Plasticity | - | 33 | 38 | 97 | 63 | 66 |
| Cured properties | Hardness (Asker C) | - | 25 | 32 | 53 | 51 | 75 |
| | Thermal resistance change rate ΔR | % | +2 | +3 | +16 | +18 | +13 |
| | Thermal conductivity | W/m·K | 3.0 | 2.7 | 2.5 | 2.5 | 2.6 |

REFERENCE SIGNS LIST

11: matrix
12 to 14: thermally conductive fillers

## Claims

**1.** A thermally conductive silicone composition, which is a liquid silicone and which is curable, the thermally conductive silicone composition comprising:

(A-1) an organopolysiloxane having an alkenyl group at each end of the molecular chain;
(A-2) an organopolysiloxane having an alkenyl group at one end of the molecular chain and no reactive functional group at the other end of the molecular chain;
(A-3) an organopolysiloxane having three or more alkenyl groups in the molecule;
(A-4) an organohydrogenpolysiloxane having a silicon atom-bonded hydrogen atom at one or both ends of the molecular chain and no silicon atom-bonded hydrogen atoms in side chains of the molecular chain;
(B) a hydrosilylation catalyst; and
(C) a thermally conductive filler.

**2.** The thermally conductive silicone composition according to claim 1, wherein the liquid silicone comprises an organopolysiloxane represented by the following general Formula (1):

[Chem. 1]

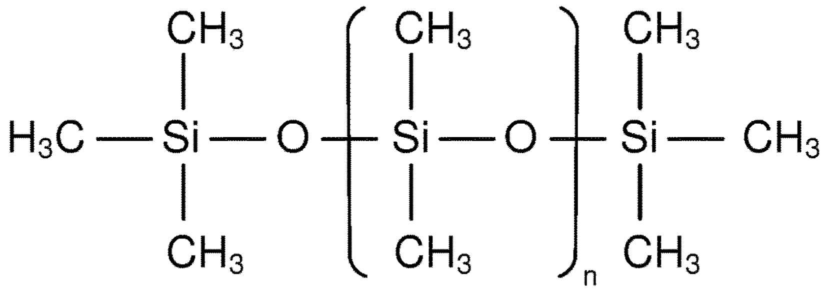

(1)

3. The thermally conductive silicone composition according to claim 1 or 2, wherein the thermally conductive filler consists of at least one of aluminum hydroxide and zinc oxide.

4. The thermally conductive silicone composition according to claim 3, wherein a minimum value $E_{min}$ of an average square error E expressed by the following Formula (a3) and a coefficient $a_0$ corresponding to the minimum value $E_{min}$ satisfy $0 \leq E_{min} \leq 45$ and $5.7 \leq a_0 \leq 13.0$:

[Math. 1]

$$E = \frac{1}{R}\sum_{n=1}^{R}(c_n - y_n)^2 \qquad (a3)$$

wherein,

$$y_n = \begin{cases} ax_n^{1/2} & (ax_n^{1/2} < 100) \\ 100 & (ax_n^{1/2} \geqq 100) \end{cases} \qquad (a4)$$

and:

$$x_n = k^{n-1}P \qquad (a1)$$

and

$$x_R = Q \qquad (a2)$$

where R is the number of particle sizes, which are calculation points for the cumulative frequency in the cumulative particle size distribution on a volume basis of the thermally conductive filler; P (μm) and Q (μm) are minimum and maximum particle sizes, respectively, of the thermally conductive filler among the particle sizes that are calculation points for the cumulative frequency; $x_n$ (μm) (where n is an integer satisfying $1 \leq n \leq R$) is a particle size of the thermally conductive filler at the nth calculation point defined to satisfy Formulae (a1) and (a2); and $c_n$ (%) is a cumulative frequency, on a volume basis, of the particle size of the thermally conductive filler corresponding to the particle size $x_n$ in the cumulative particle size distribution.

5. The thermally conductive silicone composition according to claim 3, wherein a percentage of the thermally conductive filler contained in the thermally conductive silicone composition is between 68.0% by volume and 75.0% by volume.

6. A cured product cured by a hydrosilylation reaction of the thermally conductive silicone composition according to claim 1 or 2.

[Fig. 1]

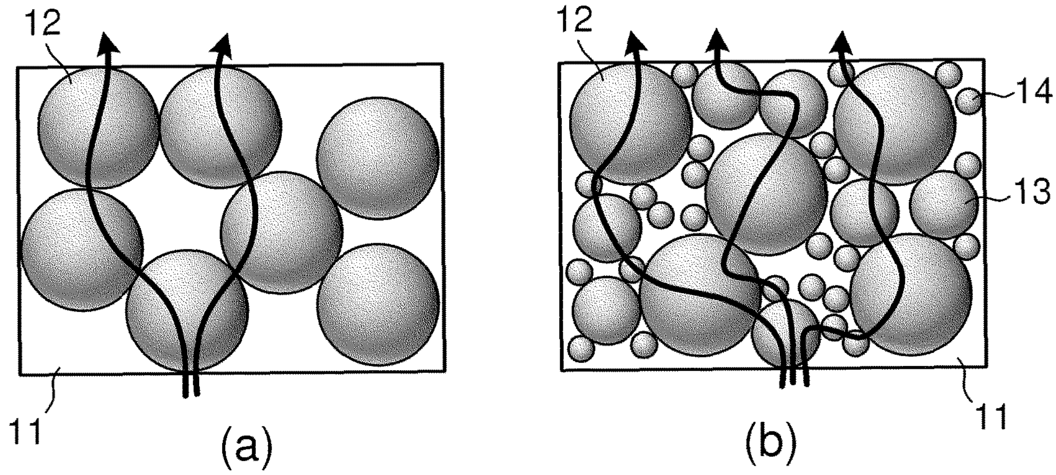
12
11
(a)
12
14
13
11
(b)

[Fig. 2]

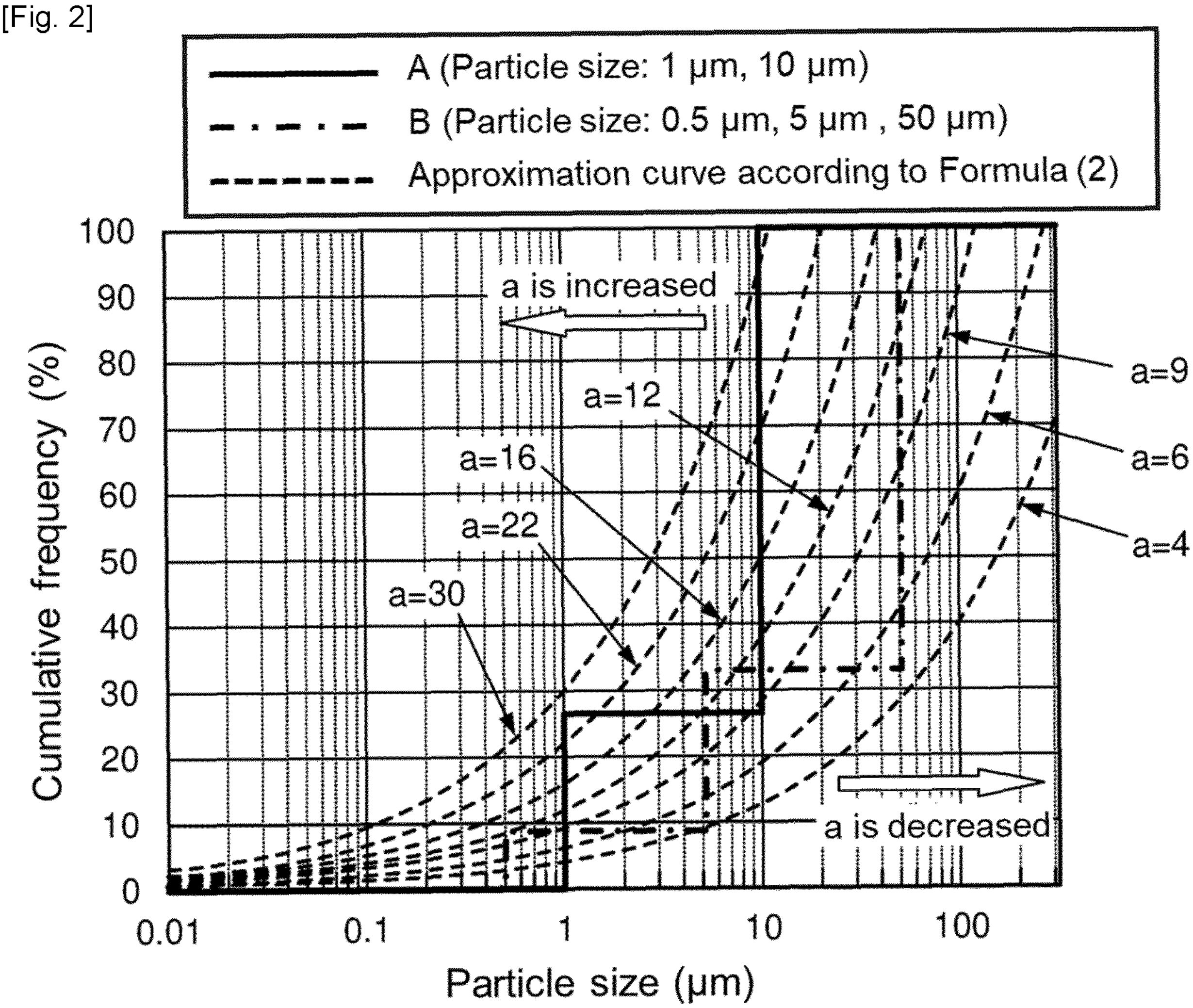
A (Particle size: 1 μm, 10 μm)
B (Particle size: 0.5 μm, 5 μm , 50 μm)
Approximation curve according to Formula (2)
Cumulative frequency (%)
100
90
80
70
60
50
40
30
20
10
0
0.01
0.1
1
10
100
Particle size (μm)
a is increased
a is decreased
a=30
a=22
a=16
a=12
a=9
a=6
a=4

[Fig. 3]

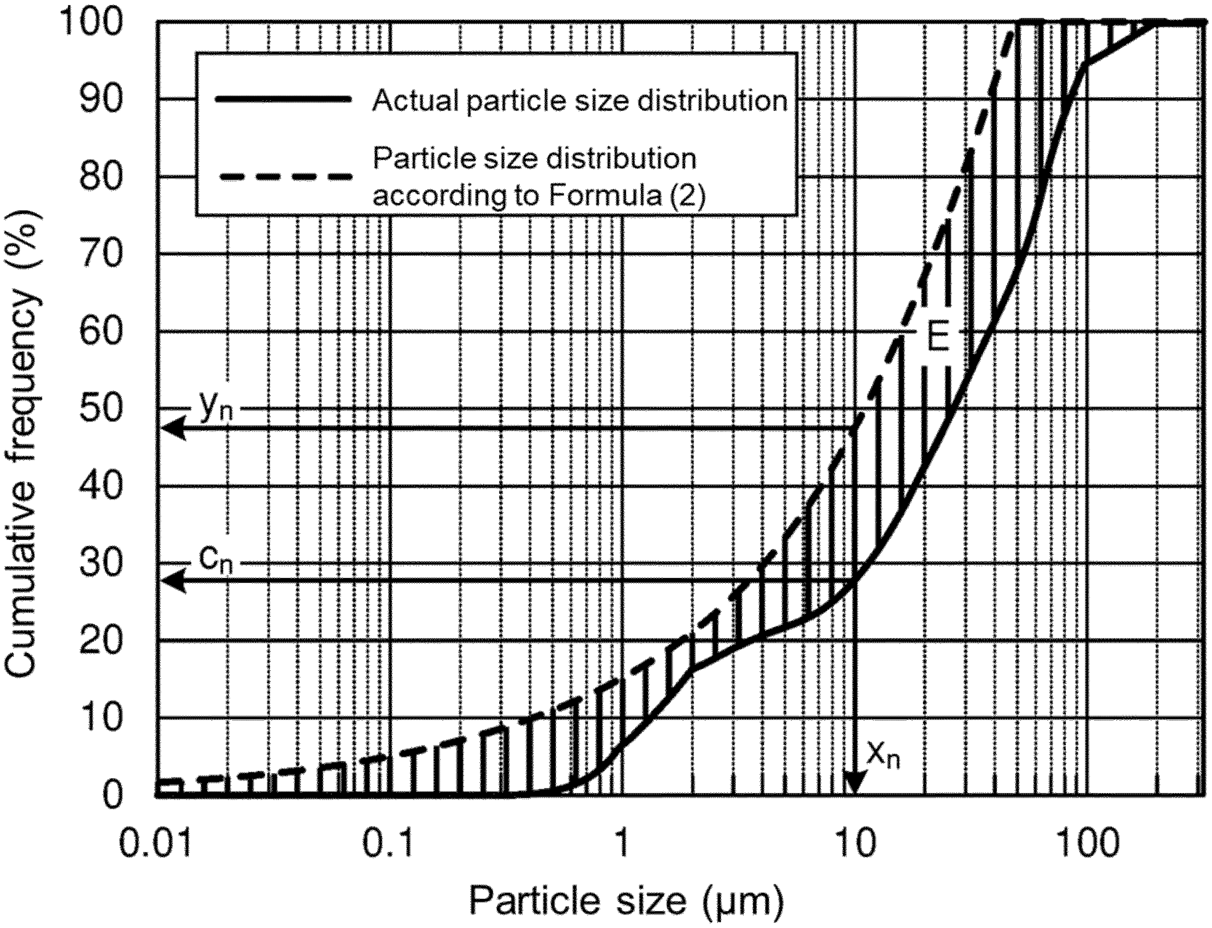
Actual particle size distribution
Particle size distribution according to Formula (2)
Cumulative frequency (%)
100
90
80
70
60
50
40
30
20
10
0
yn
cn
E
xn
0.01
0.1
1
10
100
Particle size (µm)

[Fig. 4]

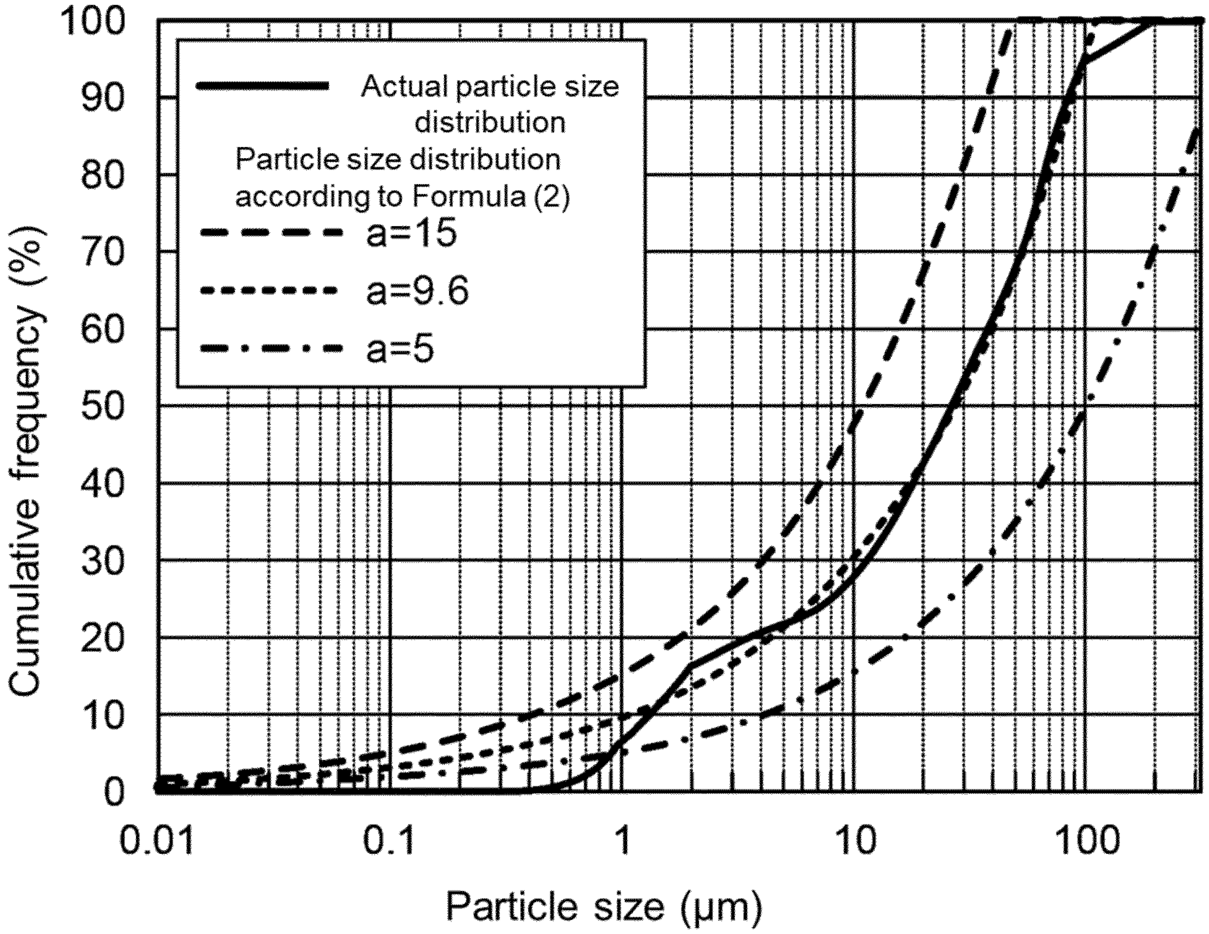
100
90
80
70
60
50
40
30
20
10
0
Cumulative frequency (%)
0.01
0.1
1
10
100
Particle size (µm)
Actual particle size distribution
Particle size distribution according to Formula (2)
a=15
a=9.6
a=5

## INTERNATIONAL SEARCH REPORT

International application No.
**PCT/JP2023/003987**

**A. CLASSIFICATION OF SUBJECT MATTER**

***C08L 83/07***(2006.01)i; ***C08K 3/22***(2006.01)i; ***C08L 83/05***(2006.01)i
FI: C08L83/07; C08L83/05; C08K3/22

According to International Patent Classification (IPC) or to both national classification and IPC

**B. FIELDS SEARCHED**

Minimum documentation searched (classification system followed by classification symbols)

C08L1/00-101/16; C08K3/00-13/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-512465 A (KCC CORP ) 23 April 2020 (2020-04-23) claims | 1-6 |
| A | WO 2010/013847 A1 (DOW CORNING TORAY CO LTD) 04 February 2010 (2010-02-04) claims | 1-6 |
| A | JP 2016-011322 A (SHIN-ETSU CHEMICAL CO., LTD.) 21 January 2016 (2016-01-21) claims | 1-6 |
| A | WO 2014/181657 A1 (SHIN-ETSU CHEMICAL CO., LTD.) 13 November 2014 (2014-11-13) claims | 1-6 |
| A | WO 2021/016743 A1 (DOW SILICONES CORPORATION) 04 February 2021 (2021-02-04) claims | 1-6 |
| A | JP 2011-016923 A (SHIN-ETSU CHEMICAL CO., LTD.) 27 January 2011 (2011-01-27) claims | 1-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 April 2023** | **18 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/003987**

| Patent document cited in search report | Publication date (day/month/year) | Patent family member(s) | Publication date (day/month/year) |
|---|---|---|---|
| JP 2020-512465 A | 23 April 2020 | US 2019/0359872 A1 claims | |
| | | WO 2018/182222 A1 | |
| | | CN 110312754 A | |
| | | KR 10-1864534 B1 | |
| WO 2010/013847 A1 | 04 February 2010 | US 2011/0190410 A1 claims | |
| | | EP 2311912 A1 | |
| | | CN 102112556 A | |
| | | KR 10-2011-0039565 A | |
| JP 2016-011322 A | 21 January 2016 | (Family: none) | |
| WO 2014/181657 A1 | 13 November 2014 | US 2016/0096984 A1 claims | |
| | | EP 2995651 A1 | |
| | | CN 105164208 A | |
| | | KR 10-2016-0006689 A | |
| | | RU 2015152054 A | |
| WO 2021/016743 A1 | 04 February 2021 | US 2022/0275206 A1 | |
| | | EP 4004117 A1 | |
| | | CN 114144477 A | |
| | | KR 10-2022-0043145 A | |
| JP 2011-016923 A | 27 January 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019021824 A
- JP 6938808 B


### Non-patent literature cited in the description


- **JONG-WOO et al.** The properties of ALN-filled epoxy molding compounds by the effects of filler size distribution. *J. Mater. Sci.*, 2000, vol. 35, 5907-5913